# EUROPEAN PATENT SPECIFICATION

(11) **EP 2 239 809 B1**
(45) Date of publication and mention of the grant of the patent: **13.06.2012**
(21) Application number: 10159131.1
(22) Date of filing: 06.04.2010
(51) Int. Cl.: H01M 8/24

(54) **Fuel cell stack**
Brennstoffzellenstapel
Empilement de pile à combustible

(30) Priority: 07.04.2009 KR 20090029942
(43) Date of publication of application: 13.10.2010
(73) Proprietor: Samsung SDI Co., Ltd., Gyeonggi-do (KR)
(72) Inventor: Lee, Jin-Hwa, Gyeonggi-do (KR); Suh, Jun-Won, Gyeonggi-do (KR)
(74) Representative: Walaski, Jan Filip

(56) References cited:
- WO-A1-2009/141987
- JP-A- 61 147 472
- US-A- 4 692 391

## Description

The described technology relates generally to a fuel cell stack. More particularly, it relates to a fuel cell stack of which an end plate is improved and a fuel cell system therewith.

A fuel cell electrochemically generates power by using a fuel (hydrogen or reformed gas) and an oxidizing agent (oxygen or air), and converts the fuel and the oxidizing agent that are continuously supplied from an external source to electric energy in the form of direct current by using a chemical energy reaction. Pure oxygen or air enriched with oxygen are used as the oxidizing agent of the fuel cell, and a fuel enriched with pure hydrogen or hydrogen generated from a reformed hydrocarbon fuel (LNG, LPG, or CH₃OH) is used as the fuel.

The fuel cell may be classified as a polymer electrolyte membrane fuel cell (PEMFC), a direct oxidation fuel cell, and a direct methanol fuel cell (DMFC). The PEMFC includes a fuel cell main body called a stack, and has a structure in which electrical energy is generated through an electrochemical reaction between a hydrogen gas supplied from a reformer and air supplied from an air pump or a fan. Here, the reformer functions as a fuel processing device that reforms a fuel, generates hydrogen gas from the reformed fuel, and supplies the hydrogen gas to the stack.

Unlike the PEMFC, the direct oxidation fuel cell is directly supplied with an alcohol-based fuel, and generates electrical energy from an electrochemical reaction of hydrogen included in the fuel and air that is supplied separately without using hydrogen gas. The direct methanol fuel cell refers to a cell among the direct oxidation fuel cells that uses methanol as a fuel.

The fuel cell includes a stack formed of a plurality of stacked cells. The cells are pressed together by an end plate installed at the most external part thereof and integrally fixed thereto. However, a conventional fuel cell has a problem in that stress is centralized in an area that is adjacent to a fastening member during a process of fixing the end plate with the fastening member and a nut for assembling a stack. The fastening member is installed adjacent to a fuel manifold or an oxidizing agent manifold so that excessive pressure is applied to inlets of a fuel path and an oxidizing agent path. When excessive pressure is applied to the inlets of the paths, the inlets are narrowed so that the fuel and the oxidizing agent cannot easily flow in. As described, when the fuel cannot easily flow in, a deviation between cells is increased and performance of the fuel cell is deteriorated.

In addition, a portion of the end plate, adjacent to the fastening member installed along an edge of the end plate, is deformed so that pressure cannot be properly applied to a center portion of the stack. As described, when the center portion is not pressed, adhesive force between cells is decreased, thereby decreasing generating efficiency.

An aspect of the present invention provides a fuel cell system and a fuel cell stack that can apply uniform pressure to a stack.

US4, 692, 391 and JP 61 147472 disclose fuel cell stack assemblies in which the end plates have a plurality of parallel grooves for receiving fastening bars that are used to fasten opposite end plates together.

According to the invention, there is provided a fuel cell stack according to claim 1 and an end plate for a fuel cell stack according to claim 13.

According to another aspect of the present invention, a fuel cell stack includes an electricity generator that generates electricity with reaction of a fuel and an oxidizing agent and an end plate disposed at the outermost part of the electricity generator, and a first groove extended in one direction is formed in the end plate and a first reinforcing member that supports the end plate is inserted in the firs groove.

According to another aspect of the present invention, the fuel cell stack may include a plurality of electricity generators, and each of the electricity generators includes a membrane electrode assembly (MEA) and separators disposed at respective sides of the MEA. According to another aspect of the present invention, two end plates may be installed in the outermost part of the electricity generator, a first reinforcing member may be formed in each of the end plates, and a fastening member that presses the first reinforcing member may be installed in the first reinforcing member.

According to another aspect of the present invention, the fastening member may include a bolt that penetrates the first reinforcing member and a nut installed to the bolt and the fastening member may include a bolt that penetrates the first reinforcing member and a nut installed to the bolt.

According to another aspect of the present invention, the first reinforcing member may support a portion that is adjacent to a center of the end plate and the first groove may be extended from one end of the end plate to the other end thereof.

According to another aspect of the present invention, the first reinforcing member may be made of a material of which strength is greater than the end plate, and the end plate may be made of a material of which corrosion resistance is greater than the first reinforcing member.

According to another aspect of the present invention, a second groove that crosses the first groove may be formed in the end plate and a second reinforcing member that presses the end plate may be formed in the second groove, and the second groove may perpendicularly cross the first groove.

According to another aspect of the present invention, the first or second groove may include a plurality of grooves, and the first reinforcing member may be inserted below the second reinforcing member so that the second reinforcing member supports the first reinforcing member.

According to another aspect of the present invention, the second reinforcing member may be placed below the first reinforcing member so that the first reinforcing member supports the second reinforcing member, and a pressure protrusion may be formed in the second reinforcing member. In addition, a pressure protrusion may be formed in the first reinforcing member or the second reinforcing member in an area where the first and second reinforcing members are in contact with each other.

According to another aspect of the present invention, a fuel cell system includes a fuel cell stack that generates electricity with a reaction between a fuel and an oxidizing agent, a fuel supply source that supplies a fuel to the stack, and an oxidizing agent supply source that supplies an oxidizing agent to the stack. The fuel cell stack includes an electricity generator that includes a membrane electrode assembly (MEA) and separators disposed at respective sides of the MEA and an end plate disposed the outermost part of the electricity generator, and a first groove extended in one direction and formed in the end plate and a first reinforcing member that supports the end plate inserted into the end plate.

According to another aspect of the present invention, a second groove that crosses the first groove may be formed in the end plate and a second reinforcing member that supports the end plate may be inserted into the second groove, and a pressure protrusion may be formed in the first reinforcing member or the second reinforcing member.

According to another aspect of the present invention, two end plates may be installed in the outermost part of the electricity generator, a fastening member that supports the end plates may be formed penetrating the end plates, and the fastening member may penetrate the first reinforcing member of the second reinforcing member.

As described, according to embodiments of the present invention, application of excessive pressure to the fuel path and the oxidizing agent path of the fuel cell stack can be prevented, and stable fastening force can be applied to a center portion of the stack.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
FIG. 1 is a schematic diagram of a fuel cell system according to an exemplary embodiment of the present invention;
FIG. 2 is an exploded perspective view of a fuel cell stack of FIG. 1;
FIG. 3 is an exploded perspective view of an end plate according to a first exemplary embodiment of the present invention;
FIG. 4 is an exploded perspective view of an end plate according to a second exemplary embodiment of the present invention;.
FIG. 5 is a perspective view of an end plate according to a third exemplary embodiment of the present invention and
FIG. 6 is a cross-sectional view of FIG. 5, taken along the line VI-VI.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

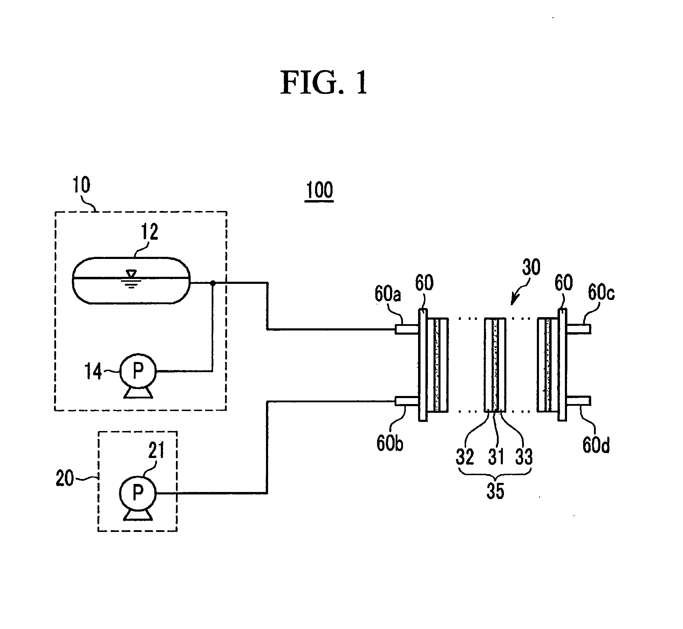

FIG. 1 is a schematic diagram of the entire configuration of a fuel cell system according to an exemplary embodiment of the present invention. Referring to FIG. 1, a fuel cell system 100 may employ a direct methanol fuel cell (DMFC) that generates electrical energy through a direct reaction of methanol and oxygen. However, this aspect of the present invention is not limited thereto, and the fuel cell system according to the present exemplary embodiment may be formed of a direct oxidation fuel cell (DOFC) that reacts liquid containing hydrogen such as ethanol, LPG, LNG, gasoline, butane gas, or a gas fuel with oxygen. In addition, the fuel cell system may be formed of a polymer electrode membrane fuel cell (PEMFC) that uses a fuel by reforming the fuel to a reformed gas enriched with hydrogen.

A fuel used in the fuel cell system 100 generally represents a hydrocarbon-based fuel in a liquid or gas state, such as methanol, ethanol, natural gas, LPS, etc. In addition, the fuel cell system 100 may use oxygen gas stored in a separate location or air as an oxidizing agent that reacts with hydrogen.

The fuel cell system 100 includes a fuel cell stack 30 that generates power by using the fuel and the oxidizing agent, a fuel supply unit 10 that supplies the fuel to the fuel cell stack 30, and an oxidizing agent supply unit 20 that supplies an oxidizing agent for generating electricity to the fuel cell stack 30. The fuel supply unit 10 is connected with the fuel cell stack 30, and includes a fuel tank 12 that stores liquid fuel and a fuel pump 14 connected to the fuel tank 12. The fuel pump 14 pumps out liquid fuel stored in the fuel tank 12 with a predetermined pumping force. The fuel stored in the fuel supply unit 10 may be high-concentration methanol, but the invention is not limited thereto.

The oxidizing agent supply unit 20 is connected to the fuel cell stack 30, and includes an oxidizing agent pump 21 that suctions external air at a predetermined pumping force and supplies the external air to the fuel cell stack 30.

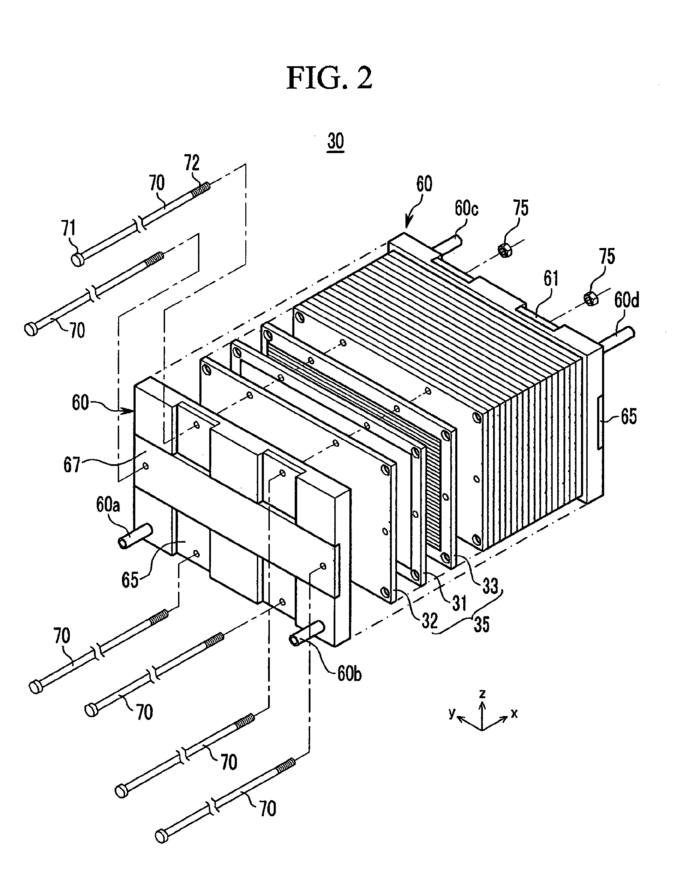

FIG. 2 is an exploded perspective view of a structure of the fuel cell stack 30 of FIG. 1. Referring to FIG. 1 and FIG. 2, the fuel cell stack 30 used in the fuel cell system 100 includes a plurality of electricity generators 35 that generate an oxidation/reduction reaction of fuel and an oxidizing agent to generate electrical energy.

Each of the electricity generators 35 is a unit cell that generates electricity. Each generator 35 includes a membrane-electrode assembly (MEA) 31 that oxidizes/reduces the fuel and oxygen included in the oxidizing agent, and separators 32 and 33 (also called bipolar plates in the art) for supplying the fuel and the oxidizing agent to the MEA 31. The electricity generator 35 has a structure in which the MEA 31 is arranged between separators 32 and 33. The MEA 31 includes an electrolyte membrane disposed in the center thereof, a cathode disposed in one side of the electrolyte membrane, and an anode disposed in the other side of the electrolyte membrane.

The MEA 31 is placed between the separators 32 and 33 which are closely positioned to each other, and respectively form a fuel path and an oxidizing agent path at both sides of the MEA 31. In this case, the fuel path is disposed on the anode of the MEA 31 and the oxidizing agent path is disposed on the cathode of the MEA 31. In addition, the electrolyte membrane enables ion exchange by moving protons generated in the anode to the cathode for combination with the oxygen to thereby generate water.

The fuel cell stack 30 of the fuel cell system 100 is formed by continuously arranging a plurality of electricity generators 35. Here, an end plate 60 is installed in the most external side of the fuel cell stack 30 to integrally fix the generator 35 to form the fuel cell stack 30.

In one side of the end plate 60, there are a fuel injection opening 60a for supplying the fuel to the fuel cell stack 30 and an oxidizing agent injection opening 60b for supplying the oxidizing agent to the stack 30. In the other end plate 60, there are a fuel emitting opening 60c for emitting unreacted fuel remaining after reaction in the anode and an oxidizing emitting opening 60d for emitting moisture generated from the combination reaction of the hydrogen and the oxygen in the cathode and unreacted air.

The end plates 60 are disposed facing each other. A fastening member 70 passes through the end plates 60. The fastening member 70 has the shape of a bolt. A head unit 71 having a horizontal cross-section that is larger than that of the fastening member 70 is formed in one end of the fastening member 70, and a screw thread 72 that is shaped to receive the threads of a nut 75 is formed in the other end.

When the fastening member 70 is inserted into the fuel cell stack 30, the head unit 71 supports the fastening member 70 from one side and the nut 75 combined to the screw thread 72 supports the fastening member 70 from the other side, thereby pressing inwardly and supporting the end plates 60. Accordingly, the electricity generators 35 can be closely adhered.

While not restricted thereto, the shown example has six fastening members 70 inserted into the end plates 60, and simultaneously rotated by using a pressure device while the end plates 60 are fixed with a locking device (not shown) to thereby fix nuts 75 to the fastening members 70. When the fastening members 70 are simultaneously fixed, generation of pressure deviation between the fastening members 70 can be prevented so that uniform fastening pressure can be applied. However, it is understood that other numbers of fastening members can be used.

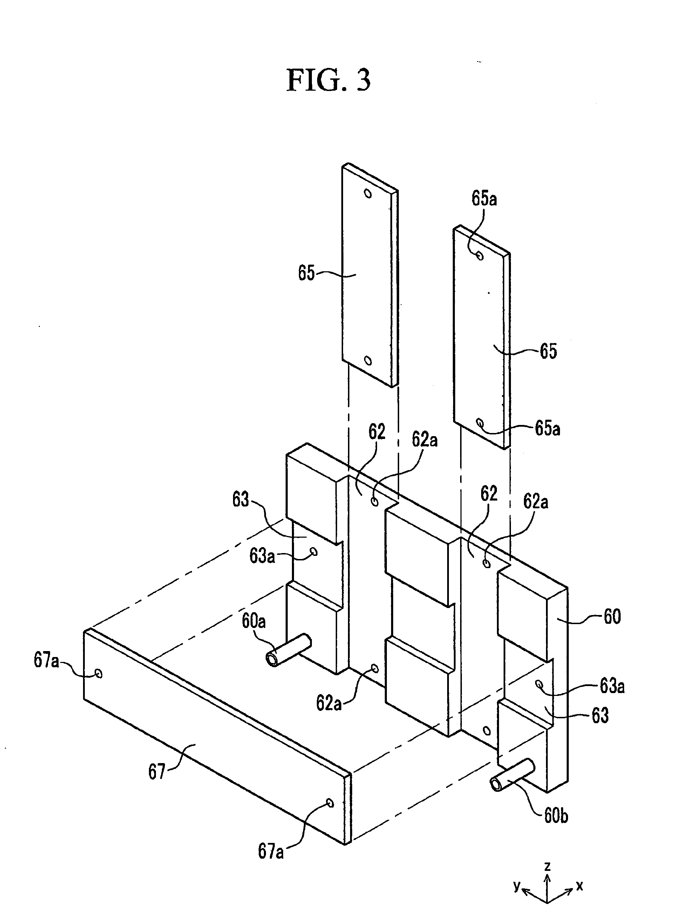

FIG. 3 is an exploded perspective view of the end plate 60 according to the first exemplary embodiment of the present invention. Referring to FIG. 3, in the end plate 60, a first groove 63 extending in a length direction (i.e., the y axis direction in FIG. 3) of the end plate 60 is formed, and a second groove 62 extending in a height direction that crosses the length direction is formed. Since the first groove 63 is formed in a center of the height direction of the end plate 60, the first groove 63 extends from one end of the length direction to the other end thereof.

The second groove 62 is formed at two locations of the end plate 60, and each grove 62 extends from one end of the height direction of the end plate 70 to the other end thereof. The second grooves 62 are deeper than the first groove 63, and the first groove 63 and the second grooves 62 perpendicularly cross each other.

A first reinforcing member 67 having a rectangular panel shape is inserted into the first groove 63. A second reinforcing member 65 having a rectangular panel shape is inserted in the second groove 62. The first reinforcing member 67 and the second reinforcing member 65 are made of a material having greater hardness than the end plate 60, and the material may be a chromium alloy or a nickel alloy. The end plate 60 is made of a material of which corrosion resistance is greater than the first and second reinforcing members 65 and 67, and the material may be stainless steel.

In addition, a hole 67a to which the fastening member 70 is inserted is formed in the first reinforcing member 67. a hole 65a to which the fastening member 70 is inserted is formed in the second reinforcing member 65. A hole 63a to which the fastening member 70 that penetrates the hole 67a of the first reinforcing member 67 is formed in the first groove 63, and a hole 62a to which the fastening member 70 that penetrates the hole 65a of the second reinforcing member 65 is formed in the second groove 62. Accordingly, the first reinforcing member 67 and the second reinforcing member 65 support the fastening member 70 by pressing the end plate 60.

The first reinforcing member 67 is provided further outside than the second reinforcing member 65 and is in contact with the second reinforcing member 65, and presses the second reinforcing member 65. Particularly, the first reinforcing member 67 presses a center portion of the second reinforcing member 65.

As described above, when the first reinforcing member 67 and the second reinforcing member 65 indirectly press the fuel cell stack 30 through the end plate 60, application of local pressure to the end plate 60 can be prevented since the entire end plate 60 can be pressed.

Accordingly, the end plate 60 can stably adhere the fuel cell stack 30 by applying uniform pressure thereto, and centralization of stress to inlets of the fuel path and the oxidizing agent path can be prevented.

Particularly, when the first reinforcing member 67 and the second reinforcing member 65 are made of a material of which strength is greater than the end plate 60, uniform pressure can be applied to the end plate 60 without deformation of the reinforcing members 67 and 65. In addition, since the first reinforcing member 67 and the second reinforcing member 65 are installed neighboring each other in the center of the end plate 60, the center of the end plate 60 can be stably applied with pressure. Further, since the center portion of the second reinforcing member 65 is pressed by the first reinforcing member 67, the second reinforcing member 65 can more easily press inside the end plate 60.

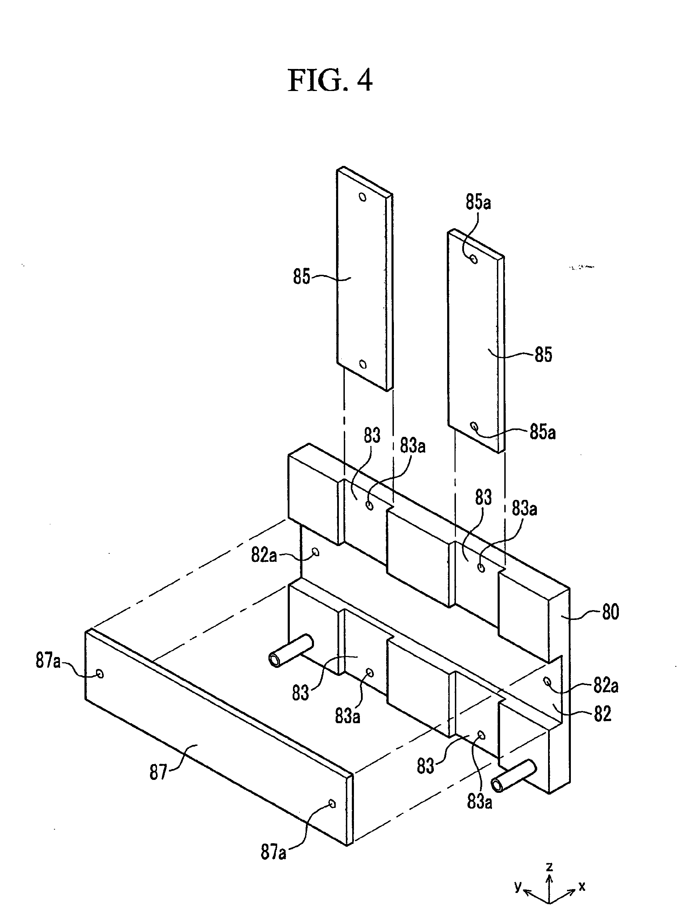

FIG. 4 is an exploded perspective view of an end plate according to a second exemplary embodiment of the present invention. Referring to FIG. 4, in an end plate 80 according to the present exemplary embodiment, a first groove 82 extending in a length direction (i.e., y axis direction in FIG. 4) of the end plate 80 is formed, and two second grooves 83 extending in a height direction (i.e., z axis direction in FIG. 4) of the end plate 80 crossing the length direction are formed.

The first groove 82 is parallel with a longer side of the end plate 80, and the second grooves 83 are parallel with a shorter side of the end plate 80. In addition, the first groove 82 is deeper than the second grooves 83, and the first groove 82 and the second grooves 83 perpendicularly cross each other. However, this aspect of the present invention is not limited thereto, and the first and second grooves 82 and 83 may extend in a diagonal direction of the end plate 80 and cross each other.

A first reinforcing member 87 is inserted into the first groove 82 and second reinforcing members 85 are inserted into the second grooves 83, and accordingly, a portion of the second reinforcing members 85 are covered by the first reinforcing member 87.

In addition, a hole 87a to which a fastening member is inserted is formed in the first reinforcing member 87, and a hole 85a to which the fastening member is inserted is formed in the second reinforcing member 85. Further, a hole 83a to which the fastening member that penetrates the hole 87a of the first reinforcing member 87 is formed in the first groove 83, and a hole 82a to which the fastening member that penetrates the hole 85a of the second reinforcing member 85 is formed in the second groove 82.

Accordingly, when the fastening member 70 is installed, the first reinforcing member 87 presses the second reinforcing member 85 so that appropriate pressure can be applied to a center portion of a fuel cell stack while preventing torsion of the first reinforcing member 87. According to the present exemplary embodiment, since the second reinforcing members 85 support the first reinforcing member 87 that is relatively longer than the second reinforcing members 85 with pressure, deformation of the first reinforcing member 87 can be prevented even though fastening force is applied for a long period of time.

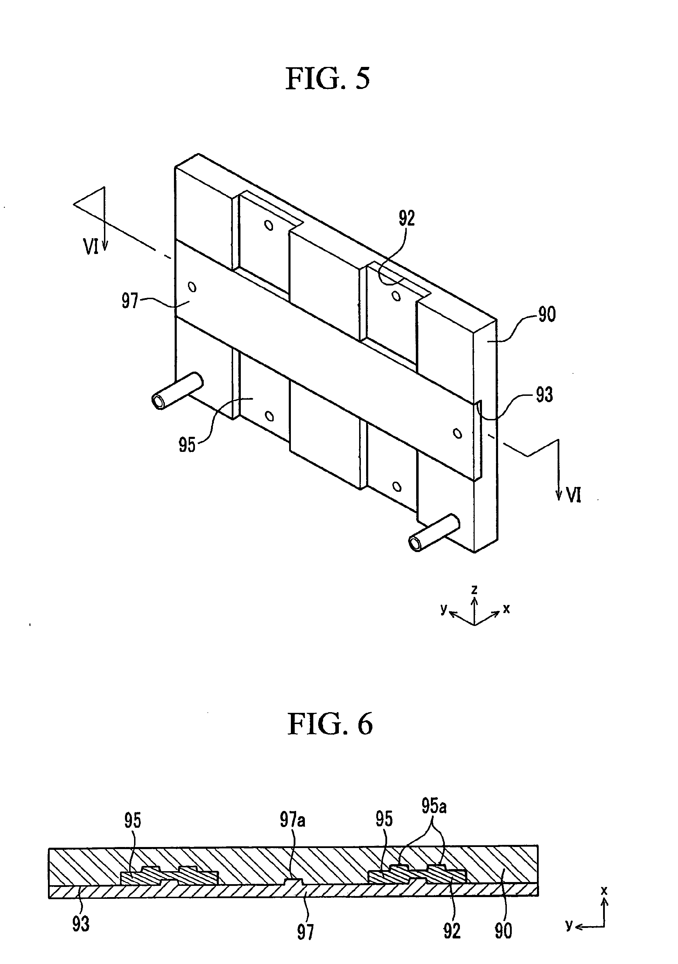

FIG. 5 is an exploded perspective view of an end plate according to a third exemplary embodiment of the present invention, and FIG. 6 is a cross-sectional view of FIG. 5, taken along the line VI to VI. Referring to FIG. 5 and FIG. 6, in an end plate 90 a first groove 93 extended in a length direction (i.e., y axis direction in FIG. 5) of the end plate 90 is formed, and two second grooves 92 extended in a height direction (i.e., z axis direction in FIG. 5) of the end plate 90, crossing the length direction of the end plate 90, are formed.

A first reinforcing member 97 is inserted into the first groove 93 and a second reinforcing member 95 is inserted the second groove 92, and accordingly, the first reinforcing member 97 is located further to an outside surface than the second reinforcing member 95. The first reinforcing member 97 and the second reinforcing member 95 are respectively disposed in directions that are perpendicular to each other.

A pressure protrusion 95a is formed in the second reinforcing member 95, and the pressure protrusion 95a is formed to press inside, particularly, at a center portion of the end plate 90. In addition, a pressure protrusion 97a is formed in the first reinforcing member 97, and the pressure protrusion 97a is formed in an area where the center portion of the end plate 90 and the second reinforcing member 95 contact each other.

Accordingly, the first reinforcing member 97 can more stably press the second reinforcing member 95, and an inside portion of the end plate 90, separated from the fastening member, can be easily pressed.

The size and number of pressure protrusions are not limited, and a plurality of fine pressure protrusions may be formed to press the center portion of the end plate. Although a few embodiments of the present invention have been shown and described, it would be appreciated by those skilled in the art that changes may be made in this embodiment without departing from the principles of the invention, the scope of which is defined in the claims.

## Claims

1. A fuel cell stack (30) comprising:
a plurality of electricity generators (35), each generator generating electricity by a reaction of a fuel and an oxidizing agent;
end plates (60, 80, 90) disposed at outermost parts of the plurality of electricity generators, each end plate comprising a first groove (63, 82, 93); and
a first reinforcing member (67, 87, 97) arranged in the first groove, wherein each of the end plates further includes a second groove (62, 83, 92) that crosses the first groove, and a second reinforcing member (65) arranged in the second groove.

2. The fuel cell stack of claim 1, further comprising a fastening member (70) arranged to pass through the first reinforcing member and to press the first reinforcing member onto the respective end plate.

3. The fuel cell stack of claim 2, wherein the fastening member comprises a bolt that passes through the first reinforcing member and a nut which is mounted to an end of the bolt, the fastening member being arranged to fasten the end plates together with the electricity generators between them.

4. The fuel cell stack of any one of the preceding claims, wherein the first reinforcing member is arranged to support a center of the end plate.

5. The fuel cell stack of any one of the preceding claims, wherein the first groove extends from one end of the end plate to the other end of the end plate.

6. The fuel cell stack of any one of the preceding claims, wherein the first reinforcing member is made of a material of greater strength than the end plate and/or is made of a material of greater corrosion resistance than the first reinforcing member.

7. The fuel cell stack of any one of the preceding claims, wherein the second groove is perpendicular to the first groove.

8. The fuel cell stack of any one of the preceding claims, wherein the first and/or the second groove comprise a plurality of grooves.

9. The fuel cell stack of any one of the preceding claims, wherein the first reinforcing member (87) is placed under the second reinforcing member (85) so that the second reinforcing member presses the first reinforcing member into the first groove.

10. The fuel cell stack of any one of the preceding claims, wherein the second reinforcing member (65, 95) is placed under the first reinforcing member (67, 97) so that the first reinforcing member presses the second reinforcing member into the second groove.

11. The fuel cell stack of any one of the preceding claims, wherein the first and/or the second reinforcing members further include a pressure protrusion (95a, 97a) to press on the end plate (90).

12. The fuel cell stack of any one of the preceding claims, further comprising a pressure protrusion on at least one of the first reinforcing member and the second reinforcing member in an area where the first and second reinforcing members are in contact with each other.

13. An end plate for use in a fuel cell stack that includes a plurality of electricity generators, the end plate comprising:
a first groove (63, 82, 93) for receiving a first reinforcing member (67, 87, 97); and
a second groove (62, 83, 92) that crosses the first groove for receiving a second reinforcing member (65).

## Patentansprüche

1. Brennstoffzellenstapel (30) mit:
mehreren Elektrizitätserzeugern (35), wobei jeder Erzeuger Elektrizität durch Reaktion eines Brennstoffs und eines Oxidationsmittels erzeugt;
Endplatten (60, 80, 90), die an den äußersten Teilen von den mehreren Elektrizitätserzeugern angeordnet sind, wobei jede Endplatte eine erste Nut (63, 82, 93) aufweist; und
einem ersten Verstärkungsbauteil (67, 87, 97), das in der ersten Nut eingerichtet ist, wobei jede der Endplatten ferner eine zweite Nut (62, 83, 92), welche die erste Nut kreuzt, und ein zweites Verstärkungsbauteil (65) aufweist, das in der zweiten Nut eingerichtet ist.

2. Brennstoffzellenstapel nach Anspruch 1, ferner mit einem Befestigungsbauteil (70), das eingerichtet ist, durch das erste Verstärkungsbauteil hindurchzugehen und das erste Verstärkungsbauteil auf die entsprechende Endplatte zu drücken.

3. Brennstoffzellenstapel nach Anspruch 2, wobei das Befestigungsbauteil einen Bolzen, der durch das erste Verstärkungsbauteil hindurchgeht, und eine Mutter aufweist, die auf ein Ende des Bolzens aufgesetzt ist, wobei das Befestigungsbauteil eingerichtet ist, die Endplatten zusammen mit den Elektrizitätserzeugern zwischen ihnen zu befestigen.

4. Brennstoffzellenstapel nach einem der vorhergehenden Ansprüche, wobei das erste Verstärkungsbauteil eingerichtet ist, ein Zentrum der Endplatte zu unterstützen.

5. Brennstoffzellenstapel nach einem der vorhergehenden Ansprüche, wobei die erste Nut sich von dem einen Ende der Endplatte zu dem anderen Ende der Endplatte erstreckt.

6. Brennstoffzellenstapel nach einem der vorhergehenden Ansprüche, wobei das erste Verstärkungsbauteil aus einem Material mit einer größeren Festigkeit als die Endplatte besteht und/oder aus einem Material mit einer höheren Korrosionsfestigkeit als das erste Verstärkungsbauteil besteht.

7. Brennstoffzellenstapel nach einem der vorhergehenden Ansprüche, wobei die zweite Nut senkrecht zur ersten Nut ist.

8. Brennstoffzellenstapel nach einem der vorhergehenden Ansprüche, wobei die erste und/oder die zweite Nut mehrere Nuten aufweisen.

9. Brennstoffzellenstapel nach einem der vorhergehenden Ansprüche, wobei das erste Verstärkungsbauteil (87) unter dem zweiten Verstärkungsbauteil (85) angeordnet ist, sodass das zweite Verstärkungsbauteil das erste Verstärkungsbauteil in die erste Nut hinein presst.

10. Brennstoffzellenstapel nach einem der vorhergehenden Ansprüche, wobei das zweite Verstärkungsbauteil (65, 95) unter dem ersten Verstärkungsbauteil (67, 97) angeordnet ist, sodass das erste Verstärkungsbauteil das zweite Verstärkungsbauteil in die zweite Nut hinein presst.

11. Brennstoffzellenstapel nach einem der vorhergehenden Ansprüche, wobei das erste und/oder das zweite Verstärkungsbauteil ferner eine Andrückvorwölbung (95a, 97a) aufweisen, um auf die Endplatte (90) zu drücken.

12. Brennstoffzellenstapel nach einem der vorhergehenden Ansprüche, ferner eine Andrückvorwölbung auf mindestens einem von dem ersten Verstärkungsbauteil und dem zweiten Verstärkungsbauteil in einem Bereich umfassend, in dem das erste und das zweite Verstärkungsbauteil einander berühren.

13. Endplatte zur Verwendung in einem Brennstoffzellenstapel, der mehrere Elektrizitätserzeuger enthält, wobei die Endplatte umfasst:
eine erste Nut (63, 82, 93) für die Aufnahme eines ersten Verstärkungsbauteils (67, 87, 97) und
eine zweite Nut (62, 83, 92), welche die erste Nut für die Aufnahme eines zweiten Verstärkungsbauteils (65) kreuzt.

## Revendications

1. Empilement de pile à combustible (30), comprenant :
une pluralité de générateurs d'électricité (35), chaque générateur générant de l'électricité par une réaction d'un combustible et d'un agent oxydant ;
des plaques d'extrémité (60, 80, 90) disposées aux parties situées le plus à l'extérieur de la pluralité de générateurs d'électricité, chaque plaque d'extrémité comprenant une première rainure (63, 82, 93) ; et
un premier élément de renfort (67, 87, 97) disposé dans la première rainure, chacune des plaques d'extrémité comprenant de plus une deuxième rainure (62, 83, 92) qui croise la première rainure, et un deuxième élément de renfort (65) disposé dans la deuxième rainure.

2. Empilement de pile à combustible selon la revendication 1, comprenant de plus un élément de fixation (70) agencé de façon à traverser le premier élément de renfort et à presser le premier élément de renfort sur la plaque d'extrémité respective.

3. Empilement de pile à combustible selon la revendication 2, dans lequel l'élément de fixation comprend un boulon qui traverse le premier élément de renfort et un écrou qui est monté sur une extrémité du boulon, l'élément de fixation étant agencé de façon à fixer les plaques d'extrémité les unes aux autres avec les générateurs d'électricité entre elles.

4. Empilement de pile à combustible selon l'une quelconque des revendications précédentes, dans lequel le premier élément de renfort est agencé de façon à supporter un centre de la plaque d'extrémité.

5. Empilement de pile à combustible selon l'une quelconque des revendications précédentes, dans lequel la première rainure s'étend d'une extrémité de la plaque d'extrémité à l'autre extrémité de la plaque d'extrémité.

6. Empilement de pile à combustible selon l'une quelconque des revendications précédentes, dans lequel le premier élément de renfort est réalisé en un matériau ayant une plus grande robustesse que celui de la plaque d'extrémité, et/ou est réalisé en un matériau ayant une plus grande résistance à la corrosion que celui du premier élément de renfort.

7. Empilement de pile à combustible selon l'une quelconque des revendications précédentes, dans lequel la deuxième rainure est perpendiculaire à la première rainure.

8. Empilement de pile à combustible selon l'une quelconque des revendications précédentes, dans lequel la première et/ou la deuxième rainures comprennent une pluralité de rainures.

9. Empilement de pile à combustible selon l'une quelconque des revendications précédentes, dans lequel le premier élément de renfort (87) est disposé sous le deuxième élément de renfort (85), de telle sorte que le deuxième élément de renfort presse le premier élément de renfort dans la première rainure.

10. Empilement de pile à combustible selon l'une quelconque des revendications précédentes, dans lequel le deuxième élément de renfort (65, 95) est disposé sous le premier élément de renfort (67, 97), de telle sorte que le premier élément de renfort presse le deuxième élément de renfort dans la deuxième rainure.

11. Empilement de pile à combustible selon l'une quelconque des revendications précédentes, dans lequel le premier et/ou le deuxième élément de renfort comprennent de plus une saillie de pression (95a, 97a) pour appuyer sur la plaque d'extrémité (90).

12. Empilement de pile à combustible selon l'une quelconque des revendications précédentes, comprenant de plus une saillie de pression sur au moins l'un du premier élément de renfort et du deuxième élément de renfort dans une zone où les premier et deuxième éléments de renfort sont en contact l'un avec l'autre.

13. Plaque d'extrémité destinée à être utilisée dans un empilement de pile à combustible qui comprend une pluralité de générateurs d'électricité, la plaque d'extrémité comprenant :
une première rainure (63, 82, 93) pour recevoir un premier élément de renfort (67, 87, 97) ; et
une deuxième rainure (62, 83, 92) qui croise la première rainure pour recevoir un deuxième élément de renfort (65).
